# EUROPÄISCHE PATENTSCHRIFT

(11) **EP 3 917 881 B1**
(45) Veröffentlichungstag und Bekanntmachung des Hinweises auf die Patenterteilung: **07.06.2023**
(21) Anmeldenummer: 20701793.0
(22) Anmeldetag: 30.01.2020
(51) Int. Cl.: C01B 33/18

(54) **MASKIERUNG VON KRISTALLINEM SILICIUMDIOXID**
MASKING OF CRYSTALLINE SILICON DIOXIDE
MASQUAGE DE DIOXYDE DE SILICIUM CRISTALLIN

(30) Priorität: 30.01.2019 EP 19154567; 02.05.2019 EP 19172386
(43) Veröffentlichungstag der Anmeldung: 08.12.2021
(73) Patentinhaber: Quarzwerke GmbH, 50226 Frechen (DE)
(72) Erfinder: ZILLES, Jörg Ulrich, 50226 Frechen (DE); KELLERMANN, Max, 50389 Wesseling (DE); PÁEZ-MALETZ, Paul, 50226 Frechen (DE)
(74) Vertreter: dompatent von Kreisler Selting Werner - Partnerschaft von Patent- und Rechtsanwälten mbB
(86) Internationale Anmeldenummer: PCT/EP2020/052286
(87) Internationale Veröffentlichungsnummer: WO 2020/157193

(56) Entgegenhaltungen:
- JP-A- 2005 263 566
- KR-A- 20130 000 999
- FUBINI ET AL: "Surface Chemistry and Quartz Hazard", ANNALS OF OCCUPATIONL HYGIENE, PERGAMON PRESS, OXFORD, GB , vol. 42, no. 8 1 November 1998 (1998-11-01), pages 521-530, XP009525065, ISSN: 0003-4878, DOI: 10.1016/S0003-4878(98)00066-0 Retrieved from the Internet: URL:https://www.sciencedirect.com/science/ article/pii/S0003487898000660
- LE BOUFFANT L ET AL: "The therapeutic action of aluminium compounds on the development of experimental lesions produced by pure quartz or mixed dust", INHALED PARTICLES, SURREY, ENG., UNWIN, GB , vol. IV, no. part 1 1 January 1975 (1975-01-01), pages 389-400, XP009525070, ISSN: 0301-1577 Retrieved from the Internet: URL:https://pubmed.ncbi.nlm.nih.gov/123617 1/

## Beschreibung

Die vorliegende Erfindung betrifft ein Verfahren zur Behandlung von kristallinem Siliciumdioxid und die so erhältlichen kristallinen Siliciumdioxid-Mehle.

Silikose, die noduläre pulmonale Fibrose, kann durch die lang andauernde und intensive Einatmung von alveolengängigen, atembaren Fraktionen von kristallinem SiOz entstehen und bei chronischer Exposition nachgelagert zur Entstehung von Lungentumoren führen. Deshalb wurde die A-Fraktion von Quarz und Cristobalit von der *International Agency for Research on Cancer* (IARC) als Humankanzerogen der Klasse 1 eingestuft. Die tatsächliche Gefährdung, die von bestimmten SiOz Spezies ausgeht, ist jedoch sehr wesentlich von ihrer Herkunft und von ihrer chemischen, thermischen und mechanischen Bearbeitung sowie dem jeweiligen industriellen Expositionsszenario abhängig (IARC, (1997) Silica, some silicates, coal dust and para-aramid fibrils. Lyon: IARC, p. 41-240. ISBN 9 283 21268 1.).

Bei gleicher chemischer und mineralogischer Zusammensetzung der SiO₂-Matrix können oberflächenmodifizierte Materialien ein drastisch unterschiedliches toxisches Potential aufweisen (Fubini, (1998) Surface chemistry and quartz hazard. Ann Occup Hyg; 42(8): 521-30 und (1998a) Health effects of silica. In "The Surface Properties of Silica". New York: Wiley, p. 415-464. ISBN 978 0 4719 5332 6).

Im Sinne des Arbeits- und Verbraucherschutzes wäre es wünschenswert, kristalline Siliciumdioxidoberflächen gezielt so zu modifizieren, dass eine Inaktivierung der beschriebenen unerwünschten biologischen Aktivität ihrer Oberfläche resultiert, jedoch die technologisch wichtigen Eigenschaften - wie z.B die gute Benetzung durch wässrige Lösungen - erhalten bleiben. Somit könnte der Einsatz oberflächenmodifizierter SiO₂-Mehle, neben der Einhaltung behördlich festgelegter Grenzwerte für berufsbedingte Expositionen, eine zusätzliche Risikomanagement-Maßnahme in den Industriezweigen zum Schutz vor Silikose darstellen, die kristallines SiOz verarbeiten oder erzeugen.

Reaktive Silanolgruppen auf der SiOz-Oberfläche wurden von Schlipköter und Brockhaus (1961) als sehr wichtiger auslösender Faktor pathologischer Effekte beschrieben. Ihre Deaktivierung könnte somit zu einer Reduktion des Risikos bei der Verarbeitung von SiOzführen.

JP 2005263566 beschreibt ein Verfahren zur Verhinderung der Verfestigung von Silikastaub durch Behandlung des Silikastaubs mit Polyalkylenglykol. Es handelt sich bei dem beschriebenen Silikastaub um ein amorphes Material besonders kleiner Korngröße.

In der Literatur wurden bereits mehrfach Polyvinylpyridin-N-oxide und Aluminiumsalze, wie Aluminiumlaktat, zur Oberflächenmodifikation von Quarz und damit zur Prävention von Silikose getestet. Es konnte jedoch bisher für diese nicht kovalent gebundenen Substanzen keine ausreichende In-vivo-Wirksamkeit gezeigt werden (Weller (1975) Long-term test on rhesus monkeys for the PVNO therapy of anthracosilicosis. Inhaled Part; 4(1): 379-87, 1975; Zhao et al. (1983) Long-term follow-up observations of the therapeutic effect of PVNO on human silicosis. Zentralbl Bakteriol Mikrobiol Hyg B; 178(3): 259-62; Prügger et al. (1984) Polyvinylpyridine N-oxide (Bay 3504, P-204, PVNO) in the treatment of human silicosis. Wien Klin Wochenschr; 96(23): 848-53; Bégin et al. (1986) Aluminium lactate treatment alters the lung biological activity of quartz. Exp Lung Res; 10: 385-99; Goldstein und Rendall (1987) The prophylactic use of polyvinylpyridine-N-oxide (PVNO) in baboons exposed to quartz dust. Environ Res; 42(2): 469-81; Dubois et al. (1988) Aluminium inhalation reduces silicosis in a sheep model. Am Rev Respir Dis; 137(5): 1172-9; Dufresne et al. (1994) Influence of aluminum treatments on pulmonary retention of quartz in sheep silicosis. Exp Lung Res; 20(2): 157-68; Bégin et al. (1995) Further information on aluminium inhalation in silicosis. Occup Environ Med; 52(11): 778-80; Le Bouffant et al. (1975) The therapeutic action of aluminium compounds on the development of experimental lesions produced by pure quartz or mixed dust. Inhaled part; 4(1): 398-400).

Hieraus ergibt sich weiterhin ein Bedarf von effektiveren Lösungen zur Modifikation von kristallinen SiOz-Mehlen in Richtung eines geringeren Potenzials der Mehle, unerwünschte biologische Effekte zu erzeugen.

Aufgabe der vorliegenden Erfindung war es, ein solches Verfahren bereitzustellen.

Gelöst wird die Aufgabe durch ein Verfahren zur Behandlung von kristallinem Siliciumdioxid, umfassend den Schritt des Vermahlens eines kristallinen Siliciumdioxids mit 0,05 - 1,00 Gew.- % einer Substanz ausgewählt aus der Gruppe bestehend aus mehrwertigen Alkoholen, Kaolin, Aluminiumalkoholaten und Mischungen davon.

Erfindungsgemäß wird also ein kristallines Siliciumdioxid zusammen mit einem mehrwertigen Alkohol, einem Aluminiumalkoholat oder Kaolin vermahlen. Dies dient der innigen Vermischung und der sofortigen Reaktion von mehrwertigem Alkohol, Aluminiumalkoholat und/oder Kaolin mit kristallinem Siliciumdioxid und dessen frisch gebrochener / erzeugten Oberfläche.

In diesem Schritt ist die eigentliche Korngrößenänderung des kristallinen Siliciumdioxids durch den Mahlschritt von untergeordneter Bedeutung; während das Brechen zur Erzeugung reaktiver Oberflächen wichtig ist.

Geeignete Korngrößen für das kristalline Siliciumdioxid-Mehl sind d50-Korngrößen im Bereich von 0,2 bis 90 µm, mehr bevorzugt 0,3 bis 10 µm, nach der Vermahlung.

d50 bedeutet die Korngröße, bei der 50 Vol-% größer sind als der angegebene d50 Wert und 50 Vol-% kleiner sind als der d50 Wert. Solche Werte können durch Laserdiffraktometrie erhalten werden.

Typischerweise ist der d90 Wert solcher vermahlener Siliciumdioxid Materialien etwa zwei bis dreimalso groß wie der d50 Wert, der d95 Wert ist etwa fünfmal so groß. Wenn ein Dokument als Obergrenze der Korngröße 1 µm beschreibt, bedeutet dies einen d50-Wert in der Größenordnung von maximal 0,3 µm, eher noch kleiner. Übliche Werte für solche Materialien sind:
- d50 = 0,5 µm → d90 = 1 µm
- d50 = 2 µm → d90 = 6 µm
- d50 = 3 µm → d90 = 10 µm.

Materialien mit einer d50 Korngröße im Bereich von 0,5 µm oder kleiner können durch mechanische Verfahren nicht mehr effektiv zerkleinert werden.

Bevorzugt weist das erfindungsgemäß erhaltene Produkt einen d90 von 1 µm oder mehr, bevorzugt 2 µm oder mehr auf, z.B. kann der d90 Wert im Bereich von 1 bis 30 µm, vorzugsweise von 1 bis 15 µm nach der Vermahlung liegen.

Kristallines Siliciumdioxid im Sinne dieser Erfindung ist ein Siliciumdioxid, das zu mindestens 70% einen kristallinen Massen-Anteil aufweist. Der kristalline Anteil wird gemessen durch Röntgenbeugung. Bevorzugt liegt der kristalline Anteil bei mindestens 75 Massen-%.

Die Bestimmung des kristallinen Anteils des Siliziumdioxids kann mit der im experimentellen Teil beschriebenen Methode erfolgen.

Besonders geeignetes Siliciumdioxid ist Quarz, Cristobalit oder Tridymit, insbesondere in Form von Mehlen.

Als mehrwertige Alkohole eignen sich insbesondere Glycerin sowie Polyethylenglykole oder Polypropylenglykole. Auch Mischungen der Substanzen oder Copolymere können eingesetzt werden.

Die Verwendung von Glycerin oder Polyethylenglykolen wird bevorzugt.

Geeignete Polyethylenglykole sind insbesondere PEG200, PEG300, PEG500, PEG1500, PEG35000 und Mischungen hiervon.

Bevorzugt weist der mehrwertige Alkohol eine molare Masse im Bereich von 92 bis 50.000 g/mol auf.

Kaolin ist ein weißes Gestein, dessen Hauptbestandteil Kaolinit, ein plättchenförmiges Alumosilikat ist, das eine Korngröße (d50) kleiner 10µm hat. Bevorzugt werden Kaoline mit einem d50 kleiner 2µm.

Ein geeignetes Aluminiumalkoholat ist insbesondere Aluminium-tri-isopropanolat (Aluminium-tris-isopropoxid).

Es hat sich überraschenderweise gezeigt, dass durch das erfindungsgemäße Verfahren das zytotoxische und proinflammatorische Potential des kristallinen Siliziumdioxid-Mehls reduziert werden kann.

Das zytotoxische und proinflammatorische Potential kann mit Verfahren gemessen werden, die im experimentellen Teil der Anmeldung beschrieben sind. Dieses Verfahren wurde vom Fraunhofer Institut für Toxikologie und Experimentelle Medizin ITEM (Hannover) an den Proben und Standards ausgeführt.

Gegenstand der Erfindung ist auch eine Zubereitung von kristallinem Siliciumdioxid, umfassend kristallines Siliciumdioxid und 0,05 - 1,00 Gew.-% einer Substanz ausgewählt aus der Gruppe bestehend aus mehrwertigen Alkoholen, Aluminiumalkoholat, Kaolin und Mischungen davon.

Eine solche erfindungsgemäße Zubereitung enthält zu mindestens 97 Gew.-% Siliciumdioxid, bevorzugt zu mindestens 98 Gew.-% Siliciumdioxid oder zu 99 oder mehr Gew.-% Siliciumdioxid, gemessen nach der Röntgenfluoreszensmethode.

Der Kristallinitätsgrad des Siliciumdioxids beträgt hierbei mindestens 70 Gew.-% oder mehr, gemessen nach der Röntgenbeugungsmethode.

Die erfindungsgemäße Zubereitung von kristallinem Siliciumdioxid hat ebenfalls eine bevorzugte d50-Korngröße im Bereich von 0,2 bis 90 µm gemessen als d50, mehr bevorzugt im Bereich von 0,3 bis 10 µm.

Gegenstand der Erfindung ist weiterhin die Verwendung von mehrwertigen Alkoholen, Aluminiumalkoholat und/oder Kaolin zur Verringerung des zytotoxischen und proinflammatorischen Potentials von kristallinem Siliciumdioxid, sowie die durch das erfindungsgemäße Verfahren erhältliche Zubereitung von kristallinem Siliciumdioxid.
Figur 1 zeigt die LDH-Freisetzung zur Messung der Induktion von Membranschäden durch Standardmaterialien.
Figur 2 zeigt die LDH-Freisetzung zur Messung der Induktion von Membranschäden durch diverse Quarzmehlproben im Vergleich zu Standards.
Figur 3 zeigt die Cxcl2 RTqPCR (Δ-CT-Methode) zur Messung der Induktion der Cxcl2 Genexpression durch diverse Quarzmehlproben in primären Alveolarmakrophagen der Ratte, bezogen auf das Hprt1 Gen als Referenzgen.

### Materialien

### Neaativkontrolle (Probe: 1): D-MEM Zellkulturmedium + 10% FKS

Als nicht-partikuläre Negativ-/Vehikelkontrolle wurde Dulbecco's-Minimum Essential Medium (D-MEM) mit Hochglukose (4.5 g/l), GlutaMaxTM und Natriumpyruvat (110 mg/l) von Life Technologies GmbH (Darmstadt), gemäß Literatur (Ziemann et al, 2017 und Ziemann C, Reamon-Buettner SM, Tillmann T et al. (2014b) The SILICOAT project: In vitro and in vivo toxicity screening of quartz varieties from traditional ceramics industry and approaches for an effective quartz surface coating. Naunyn Schmiedebergs Arch Pharmacol; 387 (Suppl 1): S23.) verwendet.

### Partikuläre Negativkontrolle (Probe: 2): Aluminumoxid (Al₂O₃)

Um allgemeine Partikeleffekte von quarz-induzierten Effekten abgrenzen zu können, wurde als partikuläre Negativkontrolle Aluminiumoxid (Al₂O₃; "aluminum oxide powder, <10 mm, 99.5% trace metal basis"; Sigma-Aldrich Chemie GmbH, München) mitgeführt. In-vitro-Studien hatten gezeigt, dass Al₂O₃ im verwendeten Modellsystem so gut wie keine adverse biologische Aktivität besitzt (Ziemann et al., 2009; Ziemann et al., 2014; Ziemann et al., 2017).

### Positivkontrolle (Ouarzeffekte; Probe: 3): Quarz DQ12 (DQ12)

Als Positivkontrolle für quarzabhängige Effekte wurde Quarz DQ12, Dörentrup (87% α-Quarz, 13% amorphes SiO2; mittlerer geometrischer Durchmesser, massengewichtet: 2.99 ± 1.53 µm; Bergbauforschung, Essen) eingesetzt, der in Europa einen akzeptierten Positivstandard für die experimentelle Toxikologie darstellt (Robock, (1973) Standard quartz DQ12 <5µm for experimental pneumoconiosis research projects in the Federal Republic of Germany. Ann Occup Hyg; 16: 63-6; Clouter et al. (2001) Inflammatory effects of respirable quartz collected in workplaces versus standard DQ12 quartz: particle surface correlates. Toxicol Sci; 63: 90-8; Creutzenberg et al. (2008) Toxicity of a quartz with occluded surfaces in a 90-day intratracheal instillation study in rats. Inhal Toxicol; 20: 995-1008). DQ12 ist in der Lage, reproduzierbar DNA- und Membranschäden im verwendeten Modellsystem zu induzieren (Monfort et al., 2008; Ziemann et al., 2009, 2014 und 2017) und entzündliche Reaktionen in der Rattenlunge hervorzurufen.

### Quenching von quarzabhängigen Effekten: Alumniumlaktat (AL)

Um quarzabhängige biologische Effekte von nicht durch Quarz vermittelten Effekten unterscheiden zu können, wurde jede Quarzmehlprobe ± Aluminiumlaktat (AL; 100µM; Sigma-Aldrich Chemie GmbH, München) getestet. Der inaktivierende Effekt von AL auf quarzabhängige biologische Effekte konnte in primären Alveolarmakrophagen (AM) aus der Ratte vielfach bestätigt werden (Monfort et al., 2008; Ziemann et al., 2009; Ziemann et al., 2014; Ziemann et al., 2017).

### Positivkontrolle (Membranschäden): Triton-X100

Als Positivkontrolle (High Control) und Kalkulationsreferenz (100% Zytotoxizität) für Versuche zur Laktatdehydrogenase (LDH)-Freisetzung wurden die Zellen mit Triton-X100 behandelt. Durch Behandlung von Zellen mit diesem nichtionischen Tensid wird die Zellmembran komplett geschädigt und alles vorhandene, normal intrazellulär lokalisierte, Laktatdehydrogenase (LDH) Enzym freigesetzt.

### Prüfsubstanzen

| **Probe** | **Vermahlung** | **Mahlhilfsmittel** | **Konzentration bezogen auf den Quarz [%]** |
|---|---|---|---|
| 37797 | auf Kugelmühle (Alubitmahlkörper) | ohne | - |
| 37935 | auf Kugelmühle (Alubitmahlkörper) | Polyglycol 35000 S Hersteller Clariant Material-Nr. 107915 | 0,4 |
| 38132 | auf Kugelmühle (Alubitmahlkörper) | Tetraethylsilikat CAS-Nr. 78-10-4 WACKER^{®} TES 28 ETHYLSILIKAT | 0,4 |
| 38157 | auf Kugelmühle (Alubitmahlkörper) | Kieselsol LUDOX^{®} TM-50 Hersteller Grace | 0,4 |
| 38174 | auf Kugelmühle (Alubitmahlkörper) | Glycerin CAS-Nr. 56-81-5 | 0,4 |
| 38193 | auf Kugelmühle (Alubitmahlkörper) | Aluminium-tris-isopropoxid CAS-Nr. 555-31-7 | 0,4 |
| 38272 | auf Kugelmühle (Alubitmahlkörper) | Kaolin KBE-1 Hersteller Amberger Kaolinwerke | 0,4 |
| 38287 | auf Kugelmühle (Alubitmahlkörper) | Epsilon-Caprolactam CAS-Nr. 105-60-2 | 0,4 |
| 38328 | auf Kugelmühle (Alubitmahlkörper) | 3-(Triethoxysilyl)propylsuc-cinanhydrid CAS-Nr. 93642-68-3 GENIOSIL^{®} GF 20 Hersteller Wacker | 0,4 |
| 38423 | auf Luftstrahlmühle autogen | ohne | - |
| 38360 | auf Kugelmühle (Alubitmahlkörper) | Alkylsiliconharz mit Alkoxygruppen SILRES^{®} BS 1260 Hersteller Wacker | 0,4 |
| 38361 | Industriestandard zugekauft Dörentrup DQ12 | (vermutlich ohne) | - |

Die Produkte hatten einheitlich eine mittlere Teilchengröße d50 von 2 µm.

### Sterilitätstestung und Testung des Endotoxingehaltes

Zunächst wurden die kristallinen Siliciumdioxide auf Sterilität und ihren Endotoxingehalt hin untersucht, da eine entsprechende Kontamination zu unspezifischen Effekten in der In-vitro-Testung führen kann. Von Artefakten können hierbei speziell Endpunkte zur Testung des proinflammatorischen Potentials betroffen sein.

Zur Prüfung der Sterilität wurden die Proben für 14 Tage bei 34-35°C in Thioglycolat-Bouillon inkubiert, die das Wachstum eines breiten Spektrums an Bakterien und Pilzen unterstützt. Als Positivkontrolle dienten Kulturen, die mit Staphylococcus aureus beimpft worden waren. Die Auswertung erfolgte nach 14 Tagen durch Sichtkontrolle (Trübung, morphologisches Pilzwachstum).

Zusätzlich wurde der Endotoxingehalt mittels "Kinetic Chromogenic LAL Assay", Methode D (siehe Abschnitt 2.6.14 der Europäischen Pharmakopöe) von einem unabhängigen Labor (Lonza, Verviers, Belgien) in drei Verdünnungsstufen bestimmt, da Endotoxine ggf. ebenfalls Immunantworten als Artefakte der In-vitro-Versuche erzeugen können.

### Behandlungslösungen

Vorkulturen der AM wurden nach Ziemann et al., 2017 präpariert und die Test- und Referenzmaterialien als doppelt konzentrierte Partikelsuspensionen nach Deagglomeration per Ultraschall vorsichtig zugegeben. Es wurden jeweils drei unterschiedliche Konzentrationen der Partikel zugegeben (25, 50 und 75 µg/cm²), um den optimalen Empfindlichkeitsbereich der LDH-Freisetzung und Cxcl2 Genexpression zu eruieren. Dieser wurde nach Vorversuchen auf 75 µg/cm² festgelegt, um ausreichende Antworten für eine Differenzierung der unterschiedlichen Proben zu gewährleisten.

Alle Test- und Referenzmaterialien wurden in An-und Abwesenheit von Aluminiumlaktat (AL) untersucht.

### Zellsystem

Es wurden primäre Alveolarmakrophagen (AM) aus der Rattenlunge als Quarzrelevantes In-vitro-Zellmodell eingesetzt. Kultivierte AM aus der Ratte stellen ein sehr sensitives In-vitro-Modellsystem zum Screening von Quarz- und Cristobalit-Effekten dar, was bereits vielfach gezeigt werden konnte (z.B. Ziemann et al., 2009; Ziemann et al., 2014; Ziemann et al., 2017).

Gewinnung und Kultivierung der AM sowie Zugabe der Partikelsuspensionen und Weiterkultivierung erfolgte gemäß den Ausführungen in Ziemann et al., 2017.

### Methoden:

### Bestimmung des kristallinen Anteils mittels Röntgenbeugung

Die Bestimmung des kristallinen Anteils des Siliziumdioxids erfolgte analog "SOP Nr. A04 Röntgendiffraktometrische Quarzfeinstaubbestimmung gemäß BGIA 8522 - Bestimmung von Cristobalit und Tridymit im A-Staub sowie Analyse kristalliner Kieselsäuren in Materialproben; Dr. M. Kirchner, IGF Analytik Dr. H.-H. Fricke, IGF Analytik T. Faak; IGF Analytik; 04/2014" und "ISO STANDARD 24095; First edition 2009-12-15; Workplace air - Guidance for the measurement of respirable crystalline silica".

Die Identifizierung und Quantifizierung kristalliner Phasen in mineralischen Füllstoffen erfolgt im Zentrallabor der Quarzwerke GmbH mittels eines Röntgendiffraktometers vom Typ D4 Endeavor der Fa. Bruker AXS mit Bragg-Brentano Geometrie unter Verwendung einer Kupferröhre.

Die Proben wurden als Pulverpresslinge gemessen, die entweder mit einer automatischen Probenpräparation der Fa. Herzog in einen Stahlring gepresst oder manuell unter Zuhilfenahme eines Glasobjektträgers in einen Probenträger eingestrichen wurden.

Die qualitative Auswertung der Diffraktogramme erfolgte mit der Software DIF-FRAC.EVA Version 4 der Fa. Bruker AXS unter Verwendung der ICDD-Strukturdatenbank PDF-2 (Release 1998).

Quantitative Analysen wurden nach dem Rietveld-Verfahren (TOPAS 5 von Bruker AXS), nach dem Additionsverfahren (gemäß DIN 32633) oder anhand von Kalibrationen (DIFFRAC.DQUANT Vers. 1 von Bruker AXS) durchgeführt.

### Laktatdehydrogenase (LDH)-Freisetzung

### LDH-Freisetzung

Nach Inkubation der primären Alveolarmakrophagen der Ratte mit den Test- und Referenzmaterialien wurde die LDH Aktivität in den Inkubationsüberständen kolorimetrisch bestimmt.

Der Nachweis einer erhöhten Enzymaktivität im Zellkulturüberstand zeigt dabei eine Schädigung der Zellmembran an, die bei reaktiven Quarzmehlen durch direkte Quarz-Zellmembran-Interaktion induziert werden kann.

Dieser Endpunkt bietet neben seiner guten Bestimmbarkeit und seiner Zuverlässigkeit den Vorteil, dass er sowohl als In-vitro-, als auch als früher In-vivo-Endpunkt in der Lungenspülung eingesetzt werden kann, und somit Korrelationen zwischen *in-vitro* und *in-vivo* generierten Daten erlaubt.

Zur Bestimmung der LDH-Aktivität wurde der "*Cytotoxicity Detection Kit* (LDH)" der Firma Roche Applied Science (Mannheim) nach Vorgaben des Herstellers eingesetzt.

Die Daten repräsentieren Mittelwerte ± SD von 3 unabhängigen Kulturen, die jeweils in Dreifachbestimmung analysiert wurden.

Als Positivkontrolle zur Berechnung der prozentualen Zytotoxizität dienten schließlich Zellen, die durch Triton X-100 Behandlung vollständig lysiert wurden. Alle Messwerte der behandelten Proben wurden schließlich auf den Wert der Triton X-100-behandelten Zellen bezogen.

### Cxcl2 Genexpression

### Cxcl2 RTqPCR (Δ-CT-Methode)

Um die biologische Aktivität der unterschiedlich oberflächenmodifizierten Quarzmehlproben zu beurteilen wurde die Ermittlung der Genexpression des pro-inflammatorischen "*C-X-C motif chemokine ligand 2*" (Cxcl2) Gens mittels RTqPCR als weiterer Endpunkt ausgewählt.

Das pro-inflammatorische Protein Cxcl2 wird von aktivierten Makrophagen produziert und hat eine anlockende Wirkung auf polymorphkernige Neutrophile (PMN). Die Anzahl und der Prozentsatz an PMNs ist dabei ein wichtiger In-vivo-Endpunkt. Zum Beispiel kann im Falle Quarz-exponierter Tiere mittels PMN Zählung in der Lungenspülflüssigkeit der Grad der adversen biologischen Aktivität von Quarz in der Lunge sehr aussagekräftig abgeschätzt werden. Dies wurde bereits in einem EU-Projekt (SILICOAT) gezeigt. Zu quarzabhängigen Cxcl2 (MIP-2) Antworten siehe u.a. auch Driscoll et al. (1996) Alpha-quartz-induced chemokine expression by rat lung epithelial cells: effects of in vivo and in vitro particle exposure. Am J Pathol. 149(5):1627- 37.

Die AM wurden nach einer Anwachsperiode von 24 h für 4 h mit den Test- und Referenzmaterialien inkubiert. Die Cxcl2 und Hprt1 Genexpression wurde anschließend mittels RTqPCR ermittelt und verrechnet. Die Daten entstammen den Mittelwerten von 3 technischen Replikaten pro Bedingung. Die Auswertung wurde nach der komparativen CT Methode (Schmittgen TD, Livak KJ. (2008) Analyzing real-time PCR data by the comparative C(T) method. Nat Protoc. 3:1101-1108)) durchgeführt, bei der auch Linearität und Effizienz geprüft wurden.

Die Informationen zu den Primern sind in der folgenden Tabelle aufgeführt:

| **Gene name** | **NCBI RefSeq** | **Ordering firm** | **Unique Assay ID** | **Product length** |
|---|---|---|---|---|
| Cxcl2 | NM_053647 | BioRad | gRno-CED0003624 | 102 bp |

| **Gene name** | **NCBI RefSeq** | **Forward primer** | **Revers primer** | **Product length** |
|---|---|---|---|---|
| Hprt | NM_012583 | CTGTCATGTCGACCCTCAGT | | 158 bp |

### Statistik

Im Falle der LDH-Freisetzung werden die Ergebnisse in den Grafiken als Mittelwerte ± der dazugehörigen Standardabweichung (SD) aus drei Kulturen dargestellt, die wiederum als Triplikate bzw. Duplikate gemessen wurden.

Statistische Analysen wurden unter Verwendung der SigmaStat 3.1^{®} Software (Systat Software, Inc., Point Richmond, USA) durchgeführt. Eine statistische Bewertung der Ergebnisse erfolgte mittels Student's t-Test. Sowohl zur Ermittlung statistisch signifikanter Unterschiede zur partikulären Negativkontrolle, als auch zur Beurteilung signifikanter Unterschiede zwischen AL-behandelten und AL-unbehandelten Kulturen und zwischen dem Referenzquarz 37797 und den oberflächenmodifizierten Quarzmehlproben wurde der ungepaarte t-Test mit zweiseitiger Verteilung angewendet. Bei einer Irrtumswahrscheinlichkeit von unter 5% (p < 0,05) wurden die Ergebnisse als statistisch signifikant eingestuft.

### Ergebnisse und Diskussion

Zunächst wurden alle 12 gelieferten Quarzmehlproben auf Sterilität und ihren Endotoxingehalt hin untersucht, da eine entsprechende Kontamination der Quarzmehle zu artifiziellen biologischen Effekten in der In-vitro-Testung führen kann.

Auf Basis der intern durchgeführten Sterilitätsuntersuchung und der Endotoxintestung wies keine der untersuchten Quarzmehlproben eine Kontamination mit Bakterien, Pilzen oder Endotoxin auf. Artifizielle biologische Effekte auf Basis von entsprechenden Kontaminationen sind somit so gut wie ausgeschlossen.

In einem Pilotexperiment wurde einerseits die biologische Aktivität des Referenzquarzes (37797; frisch, ohne Mahlhilfsmittel vermahlenes Quarzmehl) im In-vitro-Modellsystems (AM) charakterisiert, sowie eine optimale Testkonzentration für die weiteren Messungen ermittelt.

Die Referenzquarzmehle 37797, 38361 (DQ12 QW) und DQ12 (Fraunhofer I-TEM) wurden als Positivkontrolle, AizOs (75 µg/cm²) als partikuläre Negativkontrolle einbezogen.

Bezüglich der Quarzmehlproben 37797 und 38361 wurde deutlich, dass eine Konzentration von 75 µg/cm² bei allen Versuchen angestrebt werden sollte, da nur bei dieser Konzentration eine deutliche Erhöhung der Cxcl2 Genexpression durch 37797 (36,43 [2^-CT x 10^2]) gegenüber der partikulären Negativkontrolle (2,88 [2^-CT x 10^2]) darstellbar war, die wiederum durch Anwesenheit von AL komplett inhibiert werden konnte (2,77 [2^-CT x 10^2]), was für Quarzspezifität des Effekts sprach.

Bei optimierten Testkonzentrationen wurde das vergleichende In-vitro-Screening von insgesamt zwölf unterschiedlich gemahlenen/oberflächenmodifizierten Quarzmehlen bezüglich ihres zytotoxischen und proinflammatorischen Potentials vorgenommen. Es wurden die LDH-Freisetzung und Cxcl2 Genexpression ausgewertet, um trotz gewisser Limitationen der einzelnen Methoden, klare Aussagen treffen zu können.

Es erfolgte zusätzlich eine Signifikanztestung im Vergleich zur partikulären Negativkontrolle Al₂O₃, sowie die Testung auf signifikante Unterschiede zwischen den AL-behandelten und unbehandelten Quarzmehlproben, um Aussagen über die tatsächliche Quarzabhängigkeit von Effekten zu erhalten.

### Laktatdehydrogenase (LDH)-Freisetzung

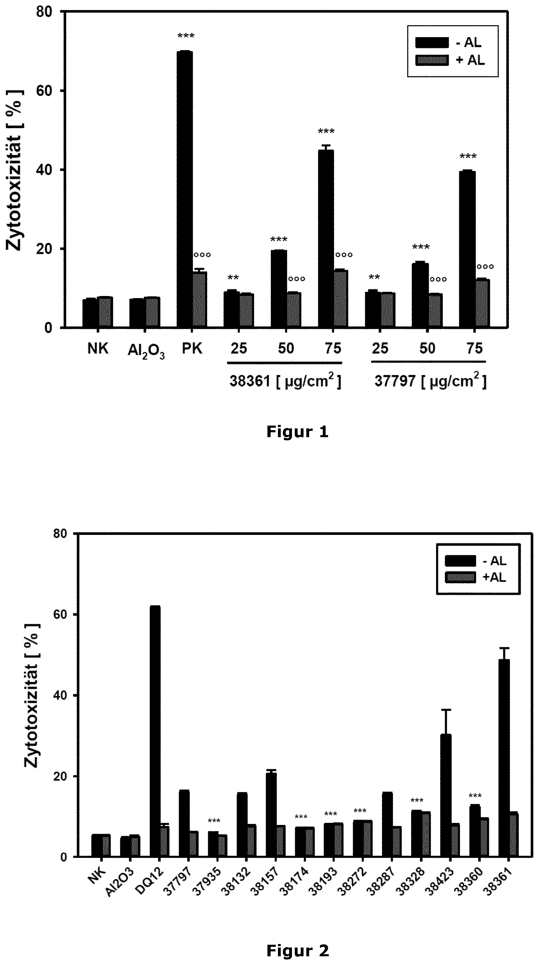

Der Endpunkt LDH-Freisetzung ergab nach 4-stündiger Inkubation von AM mit 75 µg/cm² der Test- und Referenzmaterialien ein sehr klares Bild. Während die Negativkontrolle (Zellkulturmedium) und die partikuläre Negativkontrolle (Al₂O₃) niedrige Zytotoxizitätswerte von 5,3 ± 0,10 und 4,6 ± 0,29 % aufwiesen, was für eine gute Vitalität der Zellen sprach, war für alle "aktiven" Proben (DQ12 33797, 38423 und 38361) eine signifikant höhere LDH-Aktivität im Inkubationsüberstand nachweisbar, als für die partikuläre Negativkontrolle (P ≤ 0,001; siehe Figur 2). Mit 61,6 ± 0,27 und 48,7 ± 2,95 % Zytotoxizität induzierten die Positivkontrolle (DQ12) und die Probe 38361 (DQ12 QW - Positivblindprobe) die stärksten Membranschädigungen. Probe 38423 (autogen auf einer Luftstrahlmühle frisch vermahlener Quarz) vermittelte ebenfalls erwartungsgemäß eine hohe Zytotoxizität von 30,1 ± 6,25 %. Das Referenzquarzmehl 37797 (auf der Kugelmühle frisch vermahlener Quarz) war mit 16,0 ± 0,42 % Zytotoxizität in der Hauptmessung (Figur 2) deutlich weniger aktiv, als in den ersten Messungen zur Festlegung aktiver Konzentrationsbereiche (Figur 1) (39,4 ± 0,38 %), was für einen Alterungseffekt sprechen könnte. Die Höhe des verbliebenen, membranschädigenden Effekts ließ allerdings eine klare Differenzierung zu den oberflächenmodifizierten Proben zu. Durch parallele Behandlung der Zellen mit AL, konnten die membranschädigenden Effekte der "aktiven" Quarzmehlproben fast vollständig unterdrückt werden.

Probe 37935 (Behandlungsmittel: Polyglycol 35000 S) zeigte ebenso wenig Zytotoxizität wie die partikuläre Negativkontrolle Al₂O₃ und die Negativkontrolle (ohne Partikel). 38174 (Behandlungsmittel: Glycerin) zeigte ebenso keinen negativen Effekt, gefolgt von 38193 (Behandlungsmittel: Al-tris-isopropoxid) und 38272 (Behandlungsmittel: Kaolin KBE-1).

### Cxcl2 Genexpression

Als weiterer Endpunkt wurde die Cxcl2 Genexpression der Quarzmehl-behandelten Kulturen ermittelt.

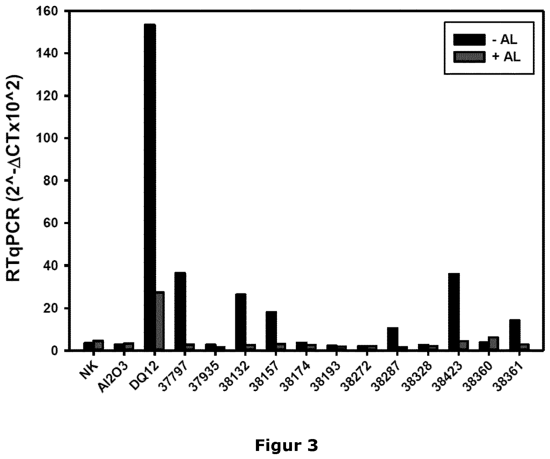

Betrachtet man die reinen Cxcl2 Genexpressionsdaten vermittelten alle per Definition "aktiven" Quarzmehlproben (DQ12, 37797, 38423 und 38361) eine deutliche Induktion der Cxcl2 Genexpression (Figur 3). Besonders der Referenzquarz 37797 (auf der Kugelmühle frisch vermahlener Quarz ohne Behandlungsmittel) wies im Vergleich zur partikulären Negativkontrolle Al₂O₃ (2,88 [2^-CT x 10^2]) eine sehr markante Steigerung der Cxcl2 Genexpression auf 36,43 [2^-CT x 10^2] auf, wobei diese fast komplett durch AL gehemmt werden konnte (2,77 [2^-CT x 10^2]). Die nicht-partikuläre Negativkontrolle zeigte eine Genexpression von 3,43 [2^-CT x 10^2]. Das deutlich schwächere Resultat der Cxcl2 Genexpression der Probe 38361 im Vergleich zu DQ12 kann ggf. mit einer Alterung der Probe erklärt werden. Probe 38361 zeigte bereits in beiden Zytotoxizitätsversuchen (Figuren 1 und 2) geringere Response als DQ12. In der Cxcl2 Genexpression ist dieser Effekt nochmals verstärkt sichtbar.

Auf Basis der Daten der Cxcl2 Genexpression war also eine Differenzierung der oberflächenmodifizierten Quarzmehle sehr gut möglich. Im Gegensatz zur Positivkontrolle 37797 zeigten die Proben 37935 (Behandlungsmittel: Polyglycol 35000 S) mit (2,68 [2^-CT x 10^2]), 38174 (Behandlungsmittel: Glycerin) mit (3,65 [2^-CT x 10^2]), 38193 (Behandlungsmittel: Al-tris-isopropoxid) mit (2,22 [2^-CT x 10^2]), 38272 (Behandlungsmittel: Kaolin KBE-1) mit (1,95 [2^-CT x 10^2]) und 38328 (Behandlungsmittel: 3-(Triethoxysilyl)propylsuc-cinanhydrid) mit (2,54 [2^-CT x 10^2]) eine nur sehr geringe Induktion der Cxcl2 Genexpression und somit ein geringes pro-inflammatorisches Potential. Bei den Proben 38132 (Behandlungsmittel: Tetraethylsilikat) mit 26,39 [2^-CT x 10^2], 38157 (Behandlungsmittel: Kieselsol) mit 18,02 [2^-CT x 10^2] und 38287 (Epsilon-Caprolactam) mit 10,45 [2^-CT x 10^2] war hingegen eine deutliche Erhöhung der Cxcl2 Genexpression evident, die durch AL in allen Fällen signifikant gehemmt werden konnte und somit auf einem quarzabhängigen Mechanismus zu beruhen schien.

### Fazit

Werden beide In-Vitro-Endpunkte (LDH-Zytotoxizität als Primäreffekt und Cxcl2 Genexpression als Sekundäreffekt) in Betracht gezogen, zeigte eine Behandlung von kristallinem SiOz mit Polyglycol (Probe 37935) oder mit Glycerin (Probe 38174) die gleichen gute Quenchingaktivität. Somit waren keine negativen Effekte der so modifizierten kristallinen SiOzPartikel auf Alveolarmakrophagen der Ratte *in-vitro* mehr nachweisbar. Mit Effekten in gleicher Größe wie die Negativkontrollen (Kulturmedium und Al₂O₃) vermittelten die genannten Oberflächenmodifikationen somit die höchste Reduktion des zytotoxischen und proinflammatorischen Potenzials von kristallinem SiOz. Ebenfalls gutes "Maskierungspotential" für die im negativen Sinne aktiven (d.h. biologisch adverse Effekte generierenden) Zentren der SiOz-Oberflächen wiesen die Aluminiumverbindungen Al-tris-isopropoxid (Probe 38193) und Kaolin KBE-1 (Probe 38272) auf.

## Patentansprüche

1. Verfahren zur Behandlung von kristallinem Siliciumdioxid, umfassend den Schritt des Vermahlens eines kristallinen Siliciumdioxids mit 0,05 - 1,00 Gew.-% einer Substanz ausgewählt aus der Gruppe bestehend aus mehrwertigen Alkoholen, Aluminiumalkoholaten, Kaolin und Mischungen davon.

2. Verfahren nach Anspruch 1, wobei das kristalline Siliciumdioxid eine d50-Korngröße nach der Vermahlung im Bereich von 0,2 bis 90 µm, mehr bevorzugt im Bereich von 0,3 µm bis 10 µm aufweist, und/oder eine d90 Korngröße nach Vermahlung im Bereich von 1 bis 300 µm, bevorzugt 1 bis 15 µm aufweist.

3. Verfahren nach Anspruch 1 oder 2, wobei der mehrwertige Alkohol ausgewählt wird aus der Gruppe bestehend aus Glycerin, Polyethylenglykolen, Polypropylenglykolen sowie Mischungen und Copolymeren davon.

4. Verfahren nach einem der Ansprüche 1 bis 3, wobei der mehrwertige Alkohol eine molare Masse im Bereich von 90 - 50.000 g/mol aufweist.

5. Verfahren nach einem der Ansprüche 1 bis 4, wobei das kristalline Siliciumdioxid mindestens 70% kristallinen Anteil aufweist.

6. Verfahren nach einem der Ansprüche 1 bis 5, wobei das kristalline Siliciumdioxid Quarz, Cristobalit, Tridymit ist.

7. Verfahren nach einem der Ansprüche 1 bis 6, wobei die Behandlung das zytotoxische und proinflammatorische Potential des kristallinen Siliciumdioxids reduziert.

8. Zubereitung von kristallinem Siliciumdioxid umfassend kristallines Siliciumdioxid und 0,05 - 1,00 Gew.-% einer Substanz ausgewählt aus der Gruppe bestehend aus mehrwertigen Alkoholen, Aluminiumalkoholaten, Kaolin und Mischungen davon.

9. Zubereitung von kristallinem Siliciumdioxid nach Anspruch 8, enthaltend mindestens 97 Gew.-% an Siliciumdioxid.

10. Zubereitung von kristallinem Siliciumdioxid nach Anspruch 8 oder 9, enthaltend Siliciumdioxid mit mindestens 70 Gew.-% kristallinem Anteil.

11. Zubereitung von kristallinem Siliciumdioxid nach Anspruch 8, 9 oder 10, wobei das kristalline Siliciumdioxid eine d50-Korngröße im Bereich von 0,2 bis 90 µm, mehr bevorzugt im Bereich von 0,3 µm bis 10 µm aufweist.

12. Verwendung von mehrwertigen Alkoholen zur Verringerung des zytotoxischen und proinflammatorischen Potentials von kristallinem Siliciumdioxid.

13. Verwendung von Kaolin zur Verringerung des zytotoxischen und proinflammatorischen Potentials von kristallinem Siliciumdioxid.

14. Verwendung von Aluminiumalkoholat zur Verringerung des zytotoxischen und proinflammatorischen Potentials von kristallinem Siliciumdioxid.

15. Zubereitung von kristallinem Siliciumdioxid erhältlich durch das Verfahren nach einem der Ansprüche 1 bis 7.

## Claims

1. A process for treating crystalline silicon dioxide, comprising the step of grinding a crystalline silicon dioxide together with from 0.05 to 1.00% by weight of a substance selected from the group consisting of polyhydric alcohols, aluminum alcoholates, kaolin, and mixtures thereof.

2. The process according to claim 1, wherein said crystalline silicon dioxide has a d50 grain size within a range of from 0.2 to 90 µm, more preferably within a range of from 0.3 to 10 µm, after the grinding, and/or a d90 grain size within a range of from 1 to 300 µm, preferably from 1 to 15 µm, after the grinding.

3. The process according to claim 1 or 2, wherein said polyhydric alcohol is selected from the group consisting of glycerol, polyethylene glycols, polypropylene glycols, and mixtures and copolymers thereof.

4. The process according to any of claims 1 to 3, wherein said polyhydric alcohol has a molar mass within a range of from 90 to 50,000 g/mol.

5. The process according to any of claims 1 to 4, wherein said crystalline silicon dioxide has at least 70% of a crystalline proportion.

6. The process according to any of claims 1 to 5, wherein said crystalline silicon dioxide is quartz, cristobalite, tridymite.

7. The process according to any of claims 1 to 6, wherein said treatment reduces the cytotoxic and pro-inflammatory potential of the crystalline silicon dioxide.

8. A formulation of crystalline silicon dioxide, comprising crystalline silicon dioxide and from 0.05 to 1.00% by weight of a substance selected from the group consisting of polyhydric alcohols, aluminum alcoholates, kaolin, and mixtures thereof.

9. The formulation of crystalline silicon dioxide according to claim 8, comprising at least 97% by weight of silicon dioxide.

10. The formulation of crystalline silicon dioxide according to claim 8 or 9, comprising silicon dioxide with at least 70% of a crystalline proportion.

11. The formulation of crystalline silicon dioxide according to claim 8, 9 or 10, wherein said crystalline silicon dioxide has a d50 grain size within a range of from 0.2 to 90 µm, more preferably within a range of from 0.3 to 10 µm.

12. Use of polyhydric alcohols for reducing the cytotoxic and pro-inflammatory potential of crystalline silicon dioxide.

13. Use of kaolin for reducing the cytotoxic and pro-inflammatory potential of crystalline silicon dioxide.

14. Use of aluminum alcoholate for reducing the cytotoxic and pro-inflammatory potential of crystalline silicon dioxide.

15. A formulation of crystalline silicon dioxide obtainable by the process according to any of claims 1 to 7.

## Revendications

1. Procédé pour le traitement de dioxyde de silicium cristallin, comprenant l'étape du broyage d'un dioxyde de silicium cristallin avec 0,05 - 1,00 % en poids d'une substance sélectionnée parmi le groupe constitué des alcools plurivalents, des alcoolates d'aluminium, du kaolin et des mélanges de ceux-ci.

2. Procédé selon la revendication 1, dans lequel le dioxyde de silicium cristallin présente une granulométrie d50 après broyage dans un intervalle de 0,2 à 90 µm, plus particulièrement dans un intervalle de 0,3 µm à 10 µm, et/ou présente une granulométrie d90 après broyage dans un intervalle de 1 à 300 µm, plus particulièrement de 1 à 15 µm.

3. Procédé selon la revendication 1 ou 2, dans lequel l'alcool plurivalent est sélectionné parmi le groupe constitué par le glycérol, les polyéthylène glycols, les polypropylène glycols ainsi que les mélanges et les copolymères de ceux-ci.

4. Procédé selon l'une des revendications 1 à 3, dans lequel l'alcool plurivalent présente une masse molaire dans un intervalle de 90 - 50 000 g/mol.

5. Procédé selon l'une des revendications 1 à 4, dans lequel le dioxyde de silicium cristallin présente au moins 70 % de fraction cristalline.

6. Procédé selon l'une des revendications 1 à 5, dans lequel le dioxyde de silicium cristallin est du quartz, de la cristobalite, du tridymite.

7. Procédé selon l'une des revendications 1 à 6, dans lequel le traitement réduit le potentiel cytotoxique et pro-inflammatoire du dioxyde de silicium cristallin.

8. Préparation de dioxyde de silicium cristallin comprenant du dioxyde de silicium cristallin et 0,05 - 1,00 % en poids d'une substance sélectionnée parmi le groupe constitué des alcools plurivalents, des alcoolates d'aluminium, du kaolin et des mélanges de ceux-ci.

9. Préparation de dioxyde de silicium cristallin selon la revendication 8, contenant au moins 97 % en poids de dioxyde de silicium.

10. Préparation de dioxyde de silicium cristallin selon la revendication 8 ou 9, contenant du dioxyde de silicium avec une fraction cristalline d'au moins 70 % en poids.

11. Préparation de dioxyde de silicium cristallin selon la revendication 8, 9 ou 10, dans lequel le dioxyde de silicium cristallin présente une granulométrie d50 dans un intervalle de 0,2 à 90 µm, plus particulièrement dans un intervalle de 0,3 µm à 10 µm.

12. Utilisation d'alcools plurivalents pour diminuer le potentiel cytotoxique et pro-inflammatoire du dioxyde de silicium cristallin.

13. Utilisation de kaolin pour diminuer le potentiel cytotoxique et pro-inflammatoire du dioxyde de silicium cristallin.

14. Utilisation d'alcoolates d'aluminium pour diminuer le potentiel cytotoxique et pro-inflammatoire du dioxyde de silicium cristallin.

15. Préparation de dioxyde de silicium cristallin pouvant être obtenu par le procédé selon l'une des revendications 1 à 7.
